# EUROPEAN PATENT APPLICATION

(11) **EP 0 837 616 A2**
(43) Date of publication of application: **22.04.1998**
(21) Application number: 97307924.7
(22) Date of filing: 07.10.1997
(51) Int. Cl.: H04Q 7/38, H04Q 7/22

(54) **Mobile communication system**

(30) Priority: 18.10.1996 JP 295923/96
(71) Applicant: MATSUSHITA ELECTRIC INDUSTRIAL CO., LTD., Kadoma-shi Osaka (JP)
(72) Inventor: Sato, Takaaki, Yokohama-shi (JP); Tatsumi, Akinori, Yokohama-shi (JP)
(74) Representative: Smith, Norman Ian

(57) **Abstract**

A mobile communication system capable of rapidly establishing dedicated control channels without increasing the control signal traffic between base stations and a control station. A base station 12i (i=1, 2, ..., N) measures the interference amount in the cell by using interference level measuring unit 12il (i=1, 2, ..., N). On the basis of the measured interference amount in the cell, radio resource selection unit 12i2 (i=1, 2, ..., N) determines whether or not radio channel assignment is possible. If the radio channel assignment is possible, the radio resource selection unit 12i2 (i=1, 2, ..., N) conducts selection and assignment out of radio resources set and secured beforehand for the dedicated control channel, and establishes an dedicated control channel by using the selected radio resource.

## Description

### BACKGROUND OF THE INVENTION

### FIELD OF THE INVENTION

The present invention relates to a mobile communication system such as automobile telephone and portable telephone, and in particular to a mobile communication system capable of establishing dedicated control signal channels without increasing the control signal traffic between base stations and a control station.

### DESCRIPTION OF THE RELATED ART

In mobile communication systems of the second generation currently in service such as the PDC (Personal Digital Cellular) system, the TDMA (Time Division Multiple Access) system has been applied as its radio access system. In the TDMA system, it is possible to determine the vacant capacity on the basis of the number of carriers which are being used in a cell in order to determine whether the channel assignment can be conducted in the cell. As a result, radio channel management can be effected by a control station which is a high rank device of the base stations and located at a remote place.

In the mobile communication system of the third mobile communication system, however, the radio access system is scheduled to become the CDMA (Code Division Multiple Access) system. In the system to which the CDMA system is applied, the vacant capacity is determined by comparing the sum of the amount of intra-cell interference always measured at a base station and the amount of an interference increase predicted from the information transfer rate and the transmission capability requested by a channel to be established with a maximum allowable interference amount threshold prescribed within the system. In the CDMA system, the vacant capacity is thus determined on the basis of the interference amount. Even if the number of mobile stations under communication in a cell is constant, therefore, the vacant capacity differs depending upon the location relation of the mobile station and the voice activity rate.

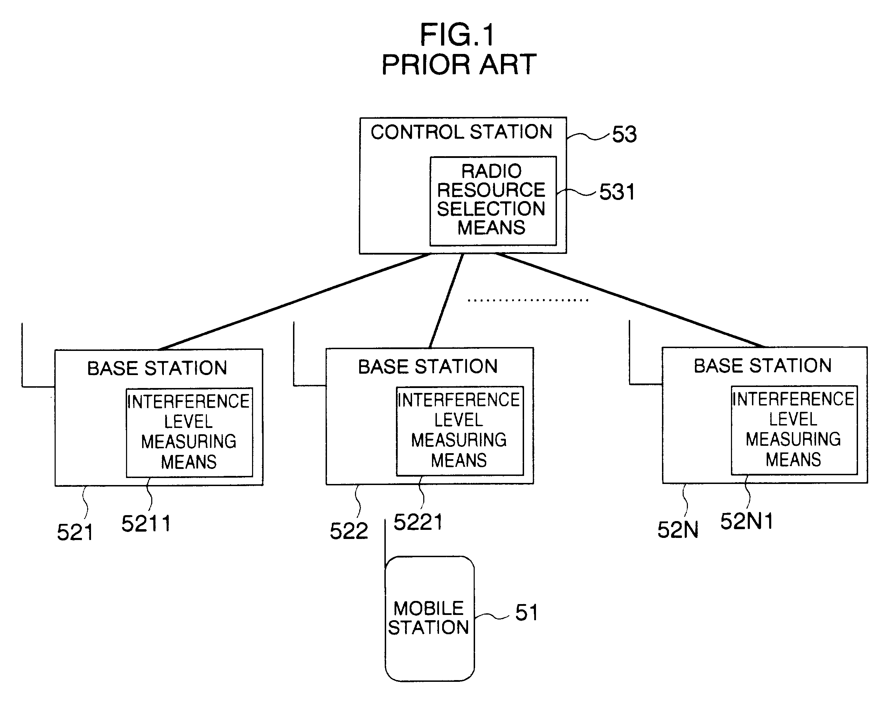

As a conventional technique, the case where a radio resource selection system similar to the PDC system is applied to the mobile communication system of the third generation will now be described. FIG. 1 shows a block diagram of the case where a radio resource selection system similar to the PDC system has been applied to the mobile communication system of the third generation.

In FIG. 1, the mobile communication system is formed by mobile stations 51, base stations 521, 522, ..., and 52N, and a control station 53. The base station 52i (i = 1, 2, ..., N) has interference level measuring means 52i1 (i = 1, 2, ..., N) for measuring the interference level existing in its own cell, and a radio equipment. The control station 53 has radio resource selection means 531. The radio resource selection means 531 determines whether radio channel assignment can be conducted on the basis of the interference amount measuring result measured by the base station. In the case where the radio resource selection means 531 has judged the assignment to be possible, it effects the radio resource selection and notifies the base station of the result of the selection. Herein, the radio resource includes at least the radio equipment of a base station and a spreading code required for the mobile station and the base station to establish an dedicated control channel.

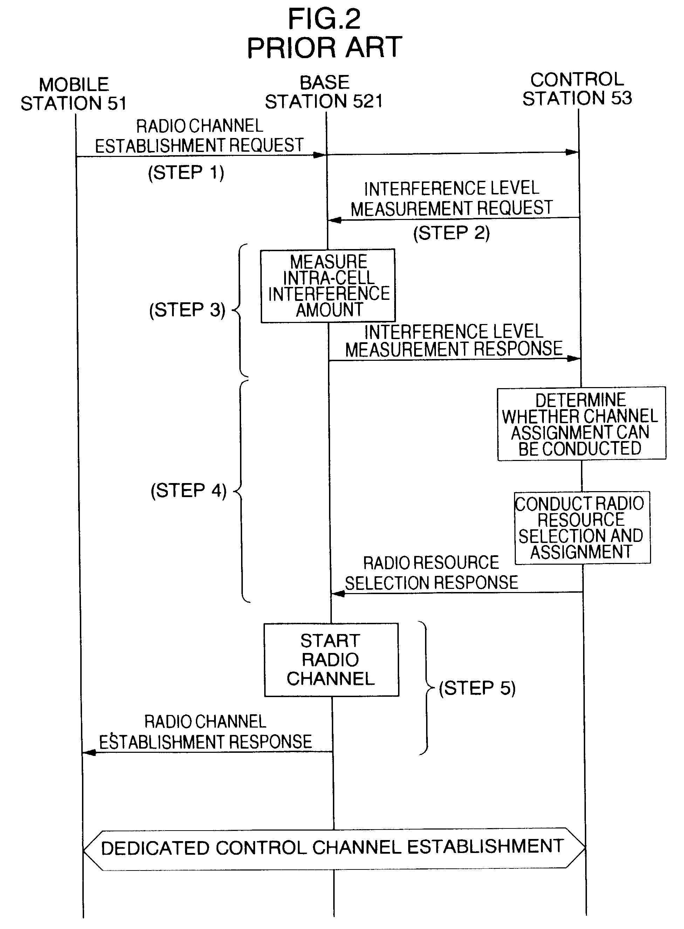

By referring to FIG. 2, the radio resource selection procedure will now be described. As an example, the case where a mobile station 51 located in a cell served by the base station 521 requests the establishment of an dedicated control channel will now be described.

### (Step 1)

Via a control channel on the up link, the mobile station 51 transmits a radio channel establishment request. The control channel is accessed randomly by a plurality of mobile stations.

The base station 521 relays the radio channel establishment request issued by the mobile station 51 and transmits it to the control station 53.

### (Step 2)

Upon receiving the radio channel establishment request, the control station 53 transmits an interference level measurement request to the base station 521.

### (Step 3)

Upon receiving the interference level measurement request, the base station 521 measures the amount of interference within the cell by using the interference level measuring means 5211 shown in FIG. 1, and reports the intra-cell interference amount to the control station in an interference level measurement response.

### (Step 4)

In the control station 53, the radio resource selection means 531 determines whether radio channel assignment can be conducted on the basis of the interference level measurement response issued by the base station 521. In the case where the assignment has been judged to be possible, the radio resource selection means 531 selects a radio resource. The result of selection of the radio resource is reported to the base station 521 in a radio resource selection response.

### (Step 5)

By using the radio resource specified by the radio resource selection response, the base station 521 starts a radio channel for an dedicated control channel. The base station 521 transmits a radio channel establishment response to the mobile station 51. In the radio channel establishment response, at least a spreading code for transmitting and receiving the dedicated control channel is included.

By the procedure of the steps 1 through 5 heretofore described, the dedicated control channel is established.

In the mobile communication system configured as heretofore described, the control station 53 executes the radio resource selection on the basis of the intra-cell interference amount measurement result measured by the base station 521, notifies the base station 521 of the result of the selection, and thereby establishes the dedicated control channel.

For executing the above described radio resource selection, however, it was necessary to cause the base station to conduct the interference amount measurement and report the measurement result to the control station. Therefore, the control signal traffic between the base stations and the control station increased. This resulted in a problem of a prolonged time taken from the reception of the radio channel establishment request until the mobile station was notified of the radio resource assignment result for the dedicated control channel.

On the other hand, a soft hand-off assisted by a mobile station in a CDMA spread spectrum cellular communication system is disclosed in U.S. Patent No. 5,267, 261. According to this scheme, respective base stations transmit common pilot signals differing in code phase, and a mobile station monitors the strength of the pilot signals and reports the measured signal strength to a system controller via the base station. In this scheme as well, however, there is no change in that communication between the mobile station and the base station and the communication between the base station and the system controller are necessary.

Furthermore, a mobile communication method using the CDMA-TDMA scheme in which one of a plurality of time slots is assigned to each cell to establish a line is disclosed in JP-A-8-65738. It is now assumed that a certain base station is communicating with a mobile station having transmission power controlled by the base station. If a different base station intercepted from the mobile station by a building until then receives a strong electromagnetic wave due to a movement of the mobile station, then in general the disturbance suddenly increases in a different mobile station. According to the method disclosed in the JP-A-8-65738, however, the influence of the disturbance can be avoided because the different base station uses a time slot different from that used by the certain base station. Here, each base station may measure mutual interference between it and base stations located around it and conduct itself time slot assignment. However, this method relates to the time slot selection for reducing the interference between a plurality of base stations, and it does not relate to the establishment of an dedicated control channel between a plurality of mobile stations and a base station located in the same cell using the CDMA scheme.

Furthermore, a method for searching for a usable control channel in a mobile communication system using the TDMA/TDD (Time Division Duplex) scheme is disclosed in JP-A-8-195977. According to this method, a base station measures the interference wave level in a time slot scheduled to carry a down control signal at the time of channel search. Unless the measured interference wave level is equal to or less than a prescribed interference wave level, the base station measures the interference wave level in another time slot until a time slot satisfying the condition is found. For up time slots as well, the interference wave level is measured in the same way. However, this method also relates to the time slot selection between a plurality of base stations, and it does not relate to the establishment of an dedicated control channel between a plurality of mobile stations and a base station located in the same cell using the CDMA scheme.

### SUMMARY OF THE INVENTION

The present invention solves the above described problems of the conventional techniques. An object of the present invention is to provide a mobile communication system in which the base station can autonomously conduct radio resource selection and assignment for an dedicated control channel and the dedicated control channel can be rapidly established without increasing the control signal traffic between the base station and the control station.

In order to solve the above described problems, in a mobile communication system according to the present invention, by using a random access signal a mobile station requests establishment of an dedicated control channel for transmitting/receiving control information in a radio section between the mobile station and a base station; control information for call establishment is transmitted/received via the established dedicated control channel; the base station includes interference level measuring means for measuring an interference amount existing in a cell supported by the base station, and radio resource selection means for determining whether or not establishment of the dedicated control channel is possible by comparing the interference amount in the cell measured by the interference level measuring means with a predetermined value and for selecting one of radio resources secured beforehand, for the dedicated control channel when determining that the establishment of the dedicated control channel is possible; and the dedicated control channel is established in a radio section between the mobile station and the base station by using the radio resource selected by the radio resource selection means.

Upon receiving a radio channel establishment request from a mobile station, each base station can autonomously select a radio resource for the dedicated control channel as heretofore described. Thus there has been implemented an excellent mobile communication system capable of establishing an dedicated radio channel rapidly after a request has been received from a mobile station.

The present invention relates to establishment of an dedicated control channel between a mobile station and a base station in originating and terminating connection, initial location registration, and user authentication. In this respect as well, the present invention differs from the U.S. Patent No. 5,267,261.

### BRIEF DESCRIPTION OF THE DRAWING

FIG. 1 is a block diagram showing the configuration of a conventional mobile communication system;
FIG. 2 is a flow diagram showing the radio resource selection procedure of the conventional mobile communication system;
FIG. 3 is a block diagram showing the configuration of a mobile communication system in a first embodiment of the present invention;
FIG. 4 is a flow diagram showing a radio resource selection procedure of a mobile communication system in the first embodiment of the present invention;
FIG. 5 is a block diagram showing the configuration of a mobile communication system in a second embodiment of the present invention;
FIG. 6 is a flow diagram showing a radio resource selection procedure of a mobile communication system in the second embodiment of the present invention;
FIG. 7 is a block diagram showing the configuration of a mobile communication system in a third embodiment of the present invention; and
FIG. 8 is a flow diagram showing a radio resource selection procedure of a mobile communication system in the third embodiment of the present invention.

### DESCRIPTION OF THE PREFERRED EMBODIMENTS

Hereafter, embodiments of the present invention will be described by referring to the drawing.

### (First Embodiment)

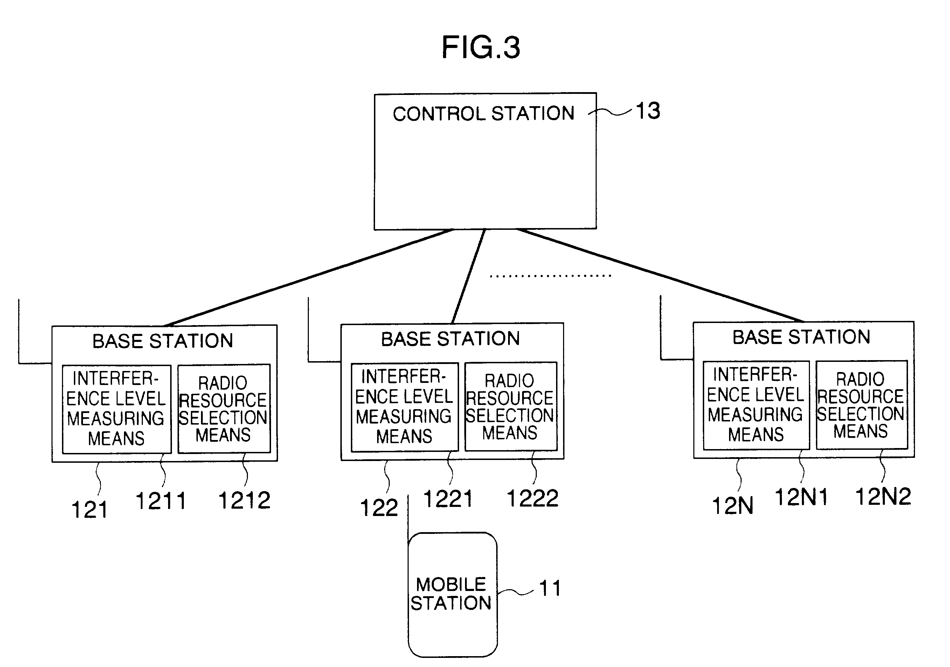

FIG. 3 shows a block diagram of a mobile communication system according to the present invention.

In FIG. 3, the mobile communication system is formed by mobile stations 11, base stations 121, 122, ..., and 12N, and a control station 13. For radio resource selection, the base station 12i (i = 1, 2, ..., N) has at least interference level measuring means 12il (i = 1, 2, ..., N) for measuring the interference level existing in the cell of its own station, and radio resource selection means 12i2 (i = 1, 2, ..., N). On the basis of the interference amount measuring result measured by the interference level measuring means 12il (i = 1, 2, ..., N), the radio resource selection means 12i2 (i = 1, 2, ..., N) determines whether channel assignment can be conducted. In the case where the radio resource selection means 12i2 (i = 1, 2, ..., N) has judged the assignment to be possible, it effects the radio resource selection. Herein, the radio resource includes at least the radio equipment of a base station and a spreading code required for the mobile station and the base station to establish an dedicated control channel.

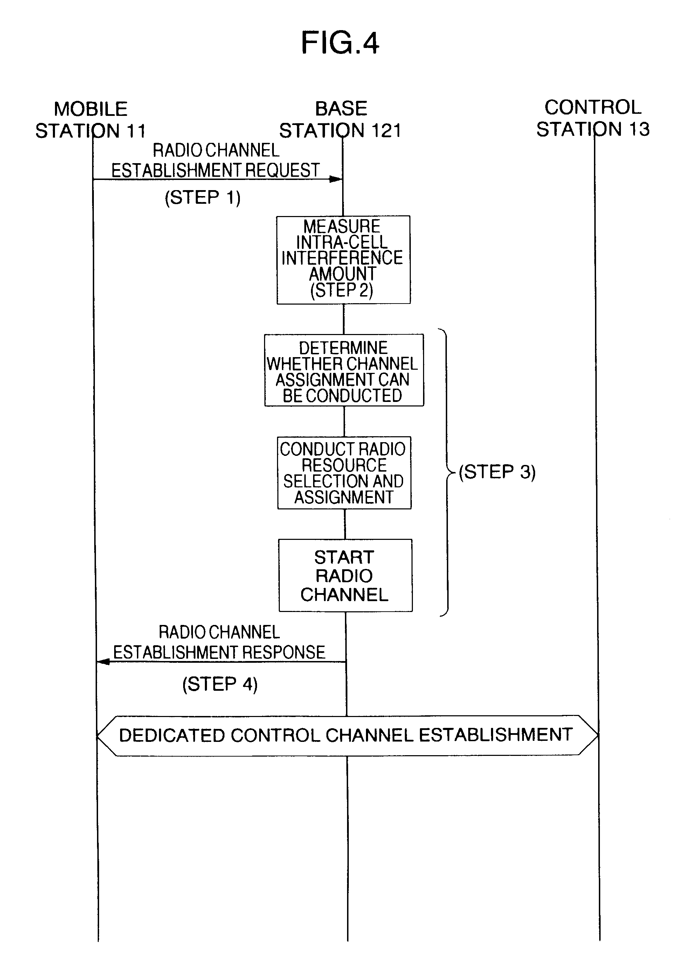

By referring to FIG. 4, the radio resource selection procedure in the mobile communication system configured as heretofore described will now be described.

FIG. 4 illustrates a radio resource selection procedure for establishing an dedicated control channel in a first embodiment of the present invention. As an example, the case where a mobile station 11 is located in a cell served by the base station 121 and the mobile station 11 requests the base station 121 to establish a radio channel will now be described.

### (Step 1)

Via a control channel on the up link, the mobile station 11 transmits a radio channel establishment request. The control channel is accessed randomly by a plurality of mobile stations.

### (Step 2)

The base station 121 measures the amount of interference within the cell by using the interference level measuring means 1211 shown in FIG. 3.

### (Step 3)

On the basis of the interference level measurement response, the base station 121 determines whether radio channel assignment can be conducted by using the radio resource selection means 1212 shown in FIG. 3. In the case where the assignment has been judged to be possible, the radio resource selection means 1212 selects a radio resource. As for the radio resource selection operation, a radio resource is selected out of radio resources set and secured beforehand for the dedicated control channel. As for the selection of the spreading code, for example, the following selection method is adopted. Assuming that code numbers 0 through k are assigned to the dedicated control channel, a spreading code which has not been used and which has the least number is used one after another.

By using the selected radio resource, the base station 121 starts a radio channel for transmitting/ receiving an dedicated control channel.

### (Step 4)

In the radio channel establishment response, the base station 121 notifies the mobile station 11 of the result of the radio resource selection.

By the procedure of the steps 1 through 4 heretofore described, the dedicated control channel is established.

Upon a radio channel establishment request from a mobile station, the base station is thus adapted to autonomously conduct the selection of a radio resource for the dedicated control channel in the first embodiment of the present invention. For implementing this, each base station includes interference level measuring means for measuring the interference amount in the cell, and radio resource selection means for determining whether channel assignment is possible on the basis of the measurement result of the intra-cell interference amount, and responsive to judging the channel assignment to be possible, for conducting selection and assignment out of radio sources set and secured beforehand for the dedicated control channel. As a result, the dedicated control channel can be established rapidly without transmitting/receiving control messages between the base station and the control station for radio resource assignment.

### (Second Embodiment)

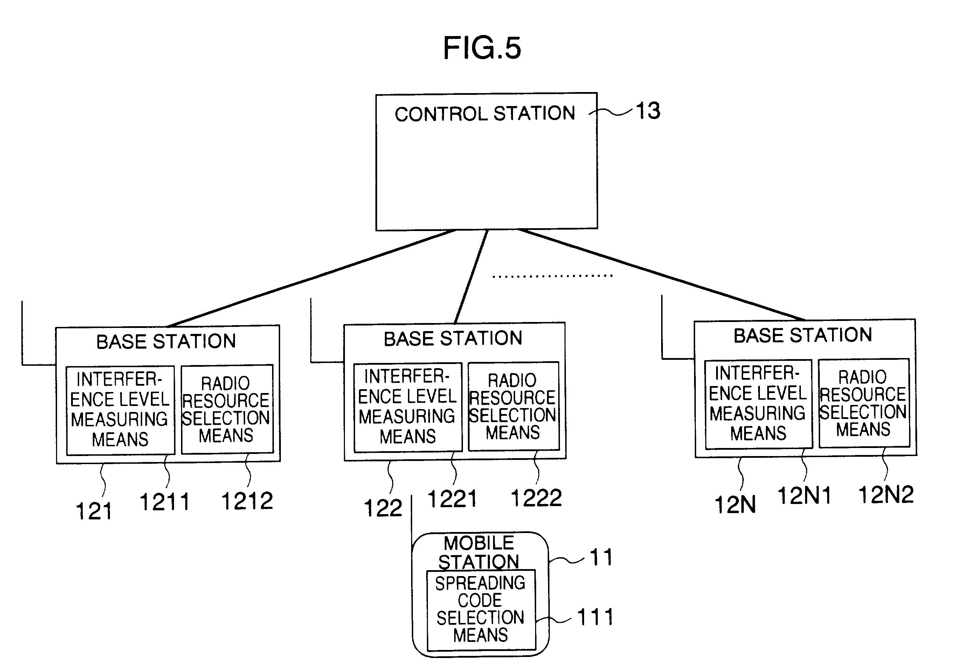

A second embodiment of the present invention differs from the first embodiment in that a message issued by a mobile station to request a base station to establish a radio channel includes at least a mobile station identifier and the mobile station and the base station respectively execute the same radio resource selection procedure based upon the mobile station identifier. As shown in FIG. 5, therefore, the mobile station 11 includes spreading code selection means 111.

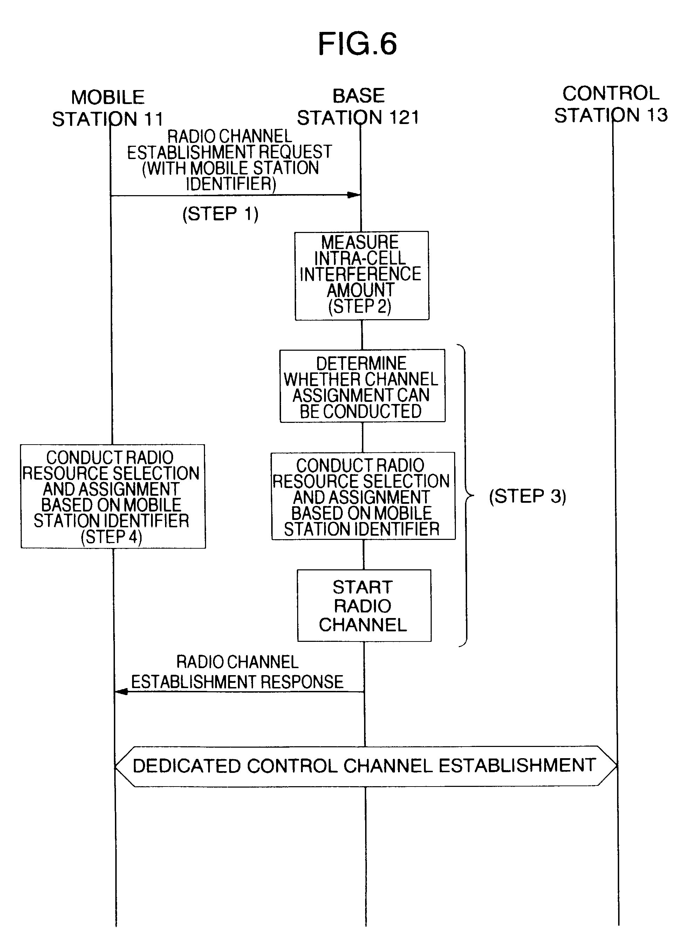

FIG. 6 is a diagram for illustrating the radio resource selection procedure of the second embodiment of the present invention. The radio resource selection procedure of the second embodiment of the present invention will now be described by referring to FIG. 6. As an example, the case where a mobile station 11 is located in a cell served by a base station 121 and the mobile station 11 requests the base station 121 to establish a radio channel will now be described.

### (Step 1)

The mobile station 11 transmits a radio channel establishment request including a mobile station identifier of its own station to the base station 121.

### (Step 2)

The base station 121 measures the amount of interference within the cell by using interference level measuring means 1211 shown in FIG. 5.

### (Step 3)

On the basis of the interference level measurement response, the base station 121 determines whether radio channel assignment can be conducted by using radio resource selection means 1212 shown in FIG. 5. In the case where the assignment has been judged to be possible, the radio resource selection means 1212 selects a radio resource. As for the radio resource selection operation, it is conducted to select a radio equipment for transmitting/receiving an dedicated control channel and a spreading code for transmitting/receiving the dedicated control channel. It is assumed that the selection of the spreading code is conducted by using a mobile station identifier. If, for example, spreading code numbers 0 through 9 are secured for the dedicated control channel in the system, then mobile stations are grouped into groups 0 through 9 by conducting the residue computation of modulo 10 and spreading code numbers are associated with group numbers.

By using the selected radio resource, the base station 121 starts a radio channel for transmitting/ receiving an dedicated control channel.

### (Step 4)

In the mobile station 11 as well, the spreading code selection means 11 shown in FIG. 5 selects a spreading code for the dedicated control channel by using the same selection method as the spreading code selection method used in the base station 121 and described in the step 3.

By the procedure of the steps 1 through 4 heretofore described, the dedicated control channel is established.

Thus according to the second embodiment of the present invention, the mobile station makes the radio channel establishment request message include at least the mobile station identifier of its own station, and the mobile station and the base station execute the same radio resource selection procedure based upon the mobile station identifier. Thereby, the dedicated control channel can be established without specification of a radio resource (spreading code) for the dedicated control channel transmitted from the base station to the mobile station. As a result, the mobile station can start the dedicated control channel immediately after the mobile station has received the radio channel establishment response from the base station.

### (Third Embodiment)

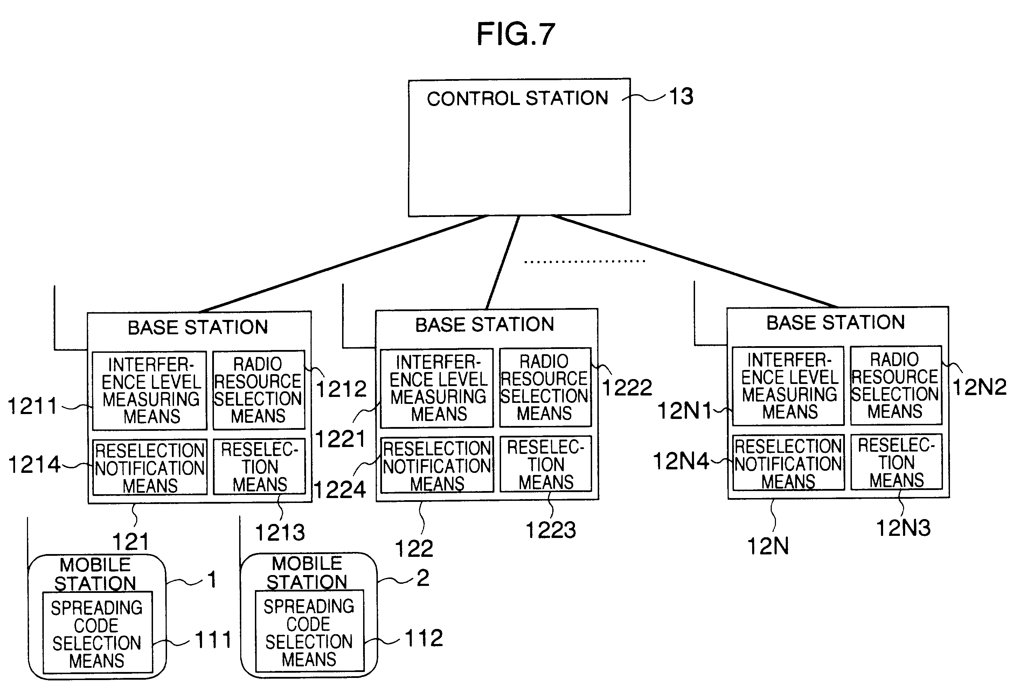

A third embodiment of the present invention differs from the second embodiment in the following point. In the case where there are radio channel establishment requests from a plurality of mobile stations and results of the radio resource selection and assignment have become the same in a plurality of mobile stations, a radio reselection and reassignment operation is executed so as to allocate different radio resources to the plurality of mobile stations. As shown in FIG. 7, therefore, the base station 12i includes reselection means 12i3 and reselection notification means 12i4.

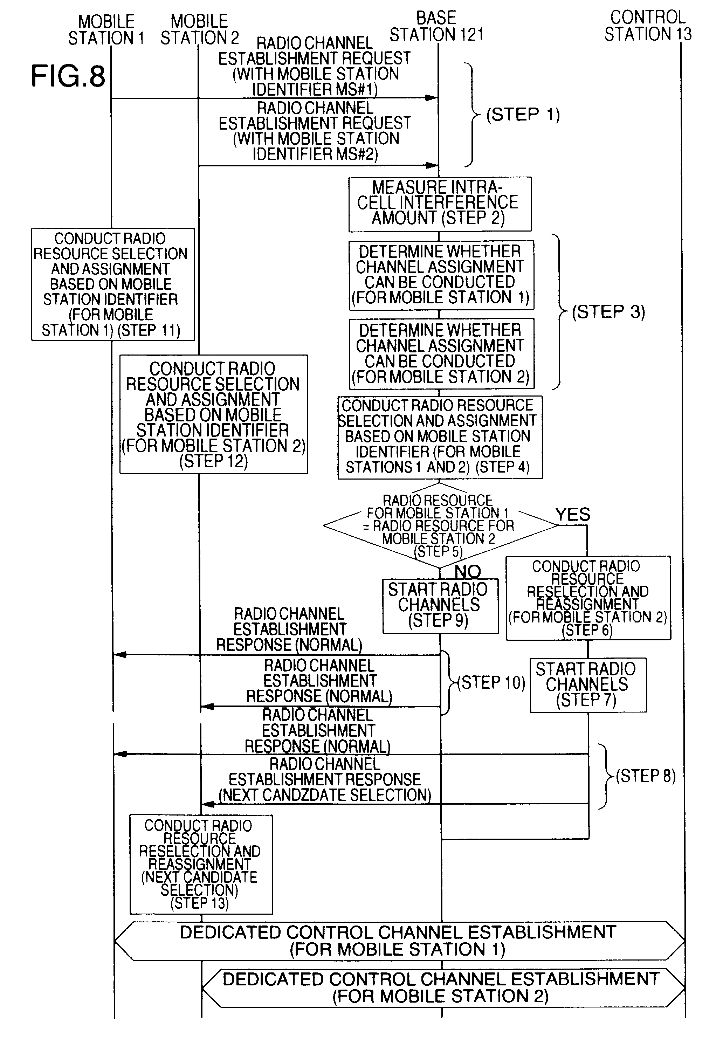

FIG. 8 is a diagram for illustrating a radio resource selection procedure of the third embodiment of the present invention. The radio resource selection procedure of the third embodiment of the present invention will now be described by referring to FIG. 8. Here, the case where two mobile stations 1 and 2 request the base station 121 to establish a radio channel is shown as an example.

### (Step 1)

Each of the mobile station 1 and the mobile station 2 transmits a radio channel establishment request to a base station. The radio channel establishment request includes at least the mobile station identifier of the mobile station.

### (Step 2)

The base station measures the intra-cell interference amount.

### (Step 3)

On the basis of the intra-cell interference amount, the base station determines whether the channel assignment is possible for the mobile station 1 and the mobile station 2.

It is now assumed that the channel assignment has been judged to be possible for both the mobile station 1 and the mobile station 2.

### (Step 4)

A radio resource for the mobile station 1 is selected on the basis of a mobile station identifier MS#1 of the mobile station 1. In the same way, a radio resource for the mobile station 2 is selected on the basis of a mobile station identifier MS#2 of the mobile station 2. The selection method is a procedure similar to that described in step 3 of the second embodiment.

### (Step 5)

It is determined whether the radio resource selected and assigned to the mobile station 1 is different from the radio resource selected and assigned to the mobile station 2. If the same radio resource has been assigned, the processing proceeds to step 6. If different radio resources have been assigned, the processing proceeds to step 9.

### (Step 6)

If the same radio resource has been assigned to the mobile stations 1 and 2, the radio resource for the mobile station 2 is reselected by using the reselection means 1213 shown in FIG. 7. For example, it is now assumed the method described in the step 3 of the second embodiment is adopted and the mobile station 2 is initially grouped into n-th group. In this case, a radio resource different from that of the mobile station 1 can be assigned by reassigning a group represented by "(n+1) mod 10" to the mobile station 2.

### (Step 7)

By using the radio resource selected for the mobile station 1 and the radio resource reselected for the mobile station 2, the base station 121 starts radio channels for transmitting dedicated control channels for the mobile stations 1 and 2.

### (Step 8)

By using the reselection notification means 1214 shown in FIG. 7, the base station 121 notifies the mobile station 1 that normal selection has been executed and notifies the mobile station 2 that the next candidate has been selected, in the radio channel establishment responses. As for the content of notification, a number difference between the group number obtained by normal grouping and the group number obtained by grouping of reselection (a number difference 1 in the above described example) may be notified.

### (Step 9)

In the case where different radio resources have been allocated to the mobile stations 1 and 2, the base station 121 starts radio channels for transmitting/ receiving dedicated control channels respectively for the mobile stations 1 and 2.

### (Step 10)

In radio channel establishment responses, the base station 121 notifies the mobile stations 1 and 2 that the normal selection has been executed.

### (Step 11)

In the mobile station 1 as well, spreading code selection means 111 shown in FIG. 7 selects a spreading code for the dedicated control channel on the basis of the mobile station identifier WS#1 of the mobile station 1 and in accordance with the same selection method as the spreading code selection method used in the base station 121.

### (Step 12)

In the mobile station 2 as well, spreading code selection means 112 shown in FIG. 7 selects a spreading code for the dedicated control channel on the basis of the mobile station identifier WS#2 of the mobile station 2 and in accordance with the same selection method as the spreading code selection method used in the base station 121.

### (Step 13)

In the case where the mobile station 2 knows by the radio channel establishment response that a radio resource for the mobile station 2 has been reselected in the base station 121, the mobile station 2 reselects a spreading code for the dedicated control channel in accordance with the content of the notification from the base station 121.

By the procedure of steps 1 through 13, the dedicated control channel is established. In the above described example, the reselection procedure of the case where the same radio resource has been selected for the radio channel establishment requests issued by two mobile stations has been described. A reselection procedure can be similarly executed also in the case where the same radio resource has been selected for radio channel establishment requests issued by three or more mobile stations.

As heretofore described, the third embodiment of the present invention differs from the second embodiment in that in the case where the same radio resource has been selected for radio channel establishment requests issued by a plurality of mobile stations, reselection of radio resources is executed and thereby different radio resources are selected for the plurality of mobile stations. Therefore, the radio resource selection in the second embodiment can be certainly executed.

In accordance with the present invention as heretofore described, a mobile communication system in which by using a random access signal a mobile station requests establishment of an dedicated control channel for transmitting/receiving control information in a radio section between the mobile station and a base station and control information for call establishment is transmitted/received via this dedicated control channel is so configured that radio resources for dedicated control channel establishment are set and secured in each base station beforehand and upon an dedicated control channel establishment request the base station autonomously conducts selection out of the radio resources. Thus the dedicated control channel can be rapidly established. Thus there is brought about such an effect that the base station can select autonomously select the radio resource for the dedicated control channel without transmitting/ receiving control messages for radio resource selection between the base station and the control station.

## Claims

1. A mobile communication system in which by using a random access signal a mobile station (11) requests establishment of an dedicated control channel for transmitting/receiving control information in a radio section between the mobile station (11) and a base station (12i), and control information for call establishment is transmitted/received via the established dedicated control channel, said base station (12i) comprising:
interference level measuring means (12il) for measuring an interference amount existing in a cell supported by said base station; and
radio resource selection means (12i2) for determining whether or not establishment of said dedicated control channel is possible by comparing the interference amount in the cell measured by said interference level measuring means with a predetermined value and for selecting one of radio resources secured beforehand, for said dedicated control channel when determining that the establishment of said dedicated control channel is possible;
wherein said dedicated control channel is established in a radio section between said mobile station and said base station by using the radio resource selected by said radio resource selection means.

2. A mobile communication system according to claim 1, wherein said radio resource selection means (12i2) notifies said mobile station of a result of the selection when determining that the establishment of said dedicated control channel is possible.

3. A mobile communication system according to claim 1, wherein:
said mobile station (11) makes said random access signal include a mobile station identifier of its own station and requests establishment of an dedicated control channel, and said mobile station (11) comprises spreading code selection means (111) for selecting one of a plurality of spreading codes for said dedicated control channel on the basis of said mobile station identifier;
when determining that the establishment of said dedicated control channel is possible, said radio resource selection means (12i2) of said base station selects one of radio resources secured beforehand, for said dedicated control channel on the basis of said mobile station identifier received from said mobile station; and
said radio resource selection means (12i2) of said base station and said spreading code selection means (111) of said base station execute an identical spreading code selection procedure on the basis of said mobile station identifier.

4. A mobile communication system according to claim 3, wherein said base station (12i) further comprises:
means (12i3), responsive to dedicated control channel establishment requests sent from a plurality of mobile stations to said base station and radio resource selection results based upon said mobile station identifiers being identical for said plurality of mobile stations, for executing reselection so as to select different radio resources for said plurality of mobile stations; and
means (12i4) for notifying only mobile stations altered in said radio resource by said reselection of a result of said reselection.

5. A mobile communication system according to any one of claims 1 to 4, wherein said radio resource comprises a radio equipment of the base station and a spreading code.
